# EUROPÄISCHE PATENTSCHRIFT

(11) **EP 1 023 554 B1**
(45) Veröffentlichungstag und Bekanntmachung des Hinweises auf die Patenterteilung: **08.01.2003**
(21) Anmeldenummer: 98954390.5
(22) Anmeldetag: 10.10.1998
(51) Int. Cl.: F16L 47/00

(54) **ROHRVERBINDUNG**
TUBING COUPLING
RACCORD DE TUYAUX

(30) Priorität: 13.10.1997 DE 19745192
(43) Veröffentlichungstag der Anmeldung: 02.08.2000
(73) Patentinhaber: FILTERWERK MANN & HUMMEL GmbH, 71631 Ludwigsburg (DE)
(72) Erfinder: ALTMANN, Klaus, D-74357 Bönnigheim (DE); LEIPELT, Rudolf, D-71672 Marbach (DE)
(74) Vertreter: Voth, Gerhard, Dipl.-Ing.
(86) Internationale Anmeldenummer: EP9806433
(87) Internationale Veröffentlichungsnummer: WO99019658

(56) Entgegenhaltungen:
- EP-A- 0 253 712
- WO-A-94/23237
- GB-A- 903 757

## Beschreibung

### Stand der Technik

Die Erfindung betrifft eine Rohrverbindung, die nach den Merkmalen des Oberbegriffs des Anspruchs 1 hergestellt ist.

Aus der GB-PS 903,757 ist bekannt, dass ein Kunststoffrohr aus thermoplastischem Material auf einem festen Schlauchanschluss dadurch befestigt wird, dass es zunächst aufgeweitet und dann auf den Schlauchanschluss aufgeschrumpft wird. Der Schlauchanschluss weist auf seinem Umfang Rillen mit Widerhakenform auf.

Es ist weiterhin aus der DE-OS 28 24 205 eine Befestigung eines Saugrohres am Zylinderkopf eines Verbrennungsmotors bekannt, bei der ein vorgefertigter ringförmiger Bund am Ende des Saugrohres vorhanden ist. Dieser Bund wird über einen Flanschring mit einem innenliegenden Elastomerring eingespannt und dann wird der Flanschring an einer Flanschfläche des Zylinderkopfes befestigt. Bei der bekannten Befestigungsart sind somit mehrere Bauteile gleichzeitig zu halten und mittels relativ umständlicher Einspann- und Anschraubvorgänge an den in der Regel nicht leicht zugänglichen Stellen am Zylinderkopf anzubringen.

### Aufgabenstellung

Der Erfindung liegt die Aufgabe zugrunde, eine Rohrverbindung vorzuschlagen, welche mit wenigen und einfachem Mitteln handhabbar ist und eine dauerhaft sichere Verbindung auch unter besonderen Einsatzbedingungen gewährleistet.

### Vorteile der Erfindung

Die gattungsgemäße Rohrverbindung mit einem ersten Rohrteil aus einem thermoplastischen Kunststoffmaterial und einem Rohranschluss als zweites Rohrteil, auf das das Rohr aufschrumpfbar ist, wird erfindungsgemäß dadurch weitergebildet, dass das erste Rohrteil ein Kunststoff-Blasteil und das zweite Rohrteil ein Kunststoff-Spritzgussteil ist, wobei beide Rohrteile über einen weiten Temperaturbereich einen in etwa gleichen Wärmedehnungskoefizienten hinsichtlich der Längs- und der Querdehnung aufweisen.

Bei einem bevorzugten Anwendungsfall ist in vorteilhafter Weise das erste Rohrteil ein Bestandteil eines Saugrohres im Ansaugweg eines Verbrennungsmotors und das andere Rohrteil ist ein Flanschteil am Zylinderkopf des Verbrennungsmotors zur Befestigung des ersten Rohrteils. Beide Rohrteile müssen hier Ausgangs- oder Betriebstemperaturen in einem Bereich von -40°C bis +150°C aushalten und sollten trotzdem dauerhaft einen festen Sitz ohne weitere Befestigungsmaterialien gewährleisten.

Um hier eine Verringerung oder Vergleichmäßigung der Wärmeausdehnungskoeffizienten in vorteilhafter Weise zu erreichen, ist gemäß der Erfindung das erste Rohrteil ein Kunststoff-Blasteil aus Polyamid mit einem Längs-Wärmeausdehnungskoeffizienten von in etwa 0,2*10⁻⁴/K und einem Quer-Wärmeausdehnungskoeffizienten von in etwa 1,0*10⁻⁴/K sowie das zweite Rohrteil ein Kunststoff-Spritzgussteil aus Polyamid mit einem Längs-Wärmeausdehnungskoeffizienten von in etwa 0,35*10⁻⁴/K und einem Quer-Wärmeausdehnungskoeffizienten von in etwa 1,2*10⁻⁴/K.

Mit den zuvor genannten Materialeigenschaften kann in vorteilhafter Weise die Streckdehnung im genannte Temperaturbereich auf ca. 12% und die Aufweitung der Rohrteile auf ca. 8% (entsprechend ca. 3 mm bei einer Nennweite von 40mm) eingeschränkt werden. Die maximale Differenz der überlappenden Rohrteile beträgt hier im genannten Temperaturbereich nur ca. 0,1 mm, was einen dauerhaft festen Sitz der verbundenen Rohrteile gewährleistet.

Als geeignete Materialien für die Rohrteile kommt vorteilhaft zum Beispiel für das erste Rohrteil PA66Gf35 und für das zweite Rohrteil PA6Gf10 oder PA6Gf15 in Frage. In an sich bekannter Weise können am zweiten Rohrteil, im Bereich des Sitzes des aufgeschrumpften ersten Rohrteils, umlaufende, gegen die Richtung des ersten Rohrteils wirkende Widerhaken angebracht werden.

Mit einem Verfahren zum Verbinden von Rohrteilen kann das erste Rohrteil im Bereich der Überlappung auf das zweite Rohrteil im kaltem Zustand aufgeweitet werden und das erste Rohrteil mit dem Bereich der Aufweitung auf das zweite Rohrteil aufgesteckt werden. Durch Erhitzen dieses Bereichs wird ein Aufschrumpfen mit anschließendem festen Sitz des ersten Rohrteils auf dem zweiten Rohrteil bewirkt. Erfindungsgemäß ist dabei in vorteilhafter Weise der Innendurchmesser vor der Aufweitung kleiner als der Außendurchmesser des zweiten Rohrteils und nach der Aufweitung geringfügig größer als der Außendurchmesser des zweiten Rohrteils.

In einem einfachen Herstellungsschritt wird das erste Rohrteil, hier bevorzugt das am Zylinderkopf zu befestigende Saugrohr, im Bereich der Überlappung mit einem zweiten Rohrteil, hier bevorzugt das Flanschteil zur Befestigung am Zylinderkopf, in kaltem Zustand aufgeweitet. In diesem Bereich des ersten Rohres wird somit eine mechanische Spannung am Umfang eingefroren, wobei der Innendurchmesser vor der Aufweitung kleiner als der Außendurchmesser des anderen Rohrteils war und nach der Aufweitung geringfügig größer als der Außendurchmesser des anderen Rohrteils ist.

Im zweiten Herstellungsschritt wird das erste Rohrteil in vorteilhafter Weise mit dem Bereich der Aufweitung auf das andere Rohrteil gesteckt und durch Erhitzen dieses Bereichs wird ein Aufschrumpfen mit anschließendem festen Sitz des ersten Rohrteils auf dem zweiten Rohrteil bewirkt. Durch die Erhitzung wird somit die bei der kalten Aufweitung eingefrorene Umfangspannung wieder frei und führt zu einer festen Umklammerung des andern Rohrteils.

Mit diesem erfindungsgemäßen Verfahren ist es somit auf einfache Weise möglich, dass das zweite Rohrteil, beispielsweise das separate Flanschteil, vor einer endgültigen Montage des ersten Rohrteils bereits an diesem befestigt werden kann und dann beide Teile zusammen mit einfachen Mitteln am Zylinderkopf eines Verbrennungsmotors befestigt werden können.

### Zeichnung

Ein Ausführungsbeispiel der erfindungsgemäßen Rohrverbindung wird anhand der Zeichnung erläutert. Es zeigen:
Figur 1 eine Rohrverbindung mit einem aufgeweiteten Rohrteil und
Figur 2 eine Rohrverbindung mit einem aufgeschrumpften Rohrteil.

### Beschreibung des Ausführungsbeispiels

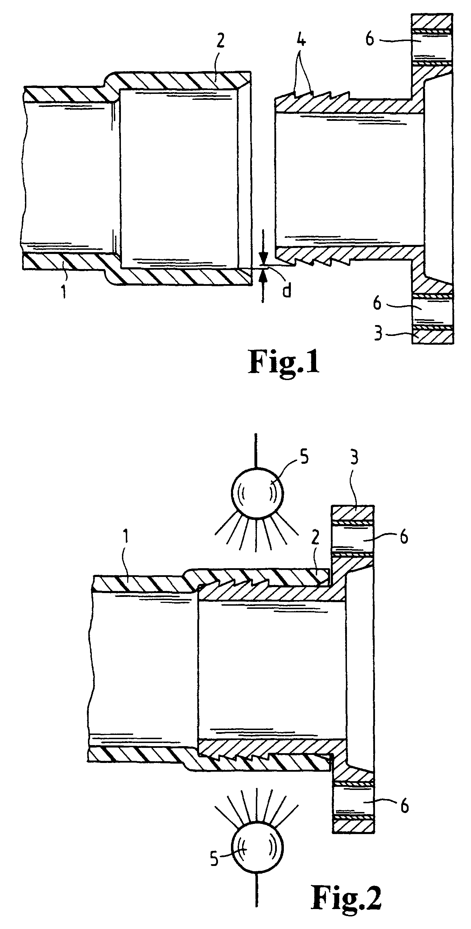

In der Figur 1 ist ein erstes Rohrteil 1, welches das Ende eines Saugrohres als Kunststoff-Blasteil für den Ansaugtrakt eines hier nicht dargestellten Verbrennungsmotor darstellt, gezeigt. Das Rohrteil 1 ist in einem Bereich 2 in kaltem Zustand aufgeweitet, so dass diese Aufweitung in diesem Zustand eingefroren ist. Ein zweites Rohrteil 3 ist als Flanschteil für die Verbindung des Saugrohres mit dem Zylinderkopf des Verbrennungsmotors ausgebildet.

Das zweite Rohrteil 3 weist an der Verbindungsstelle mit dem ersten Rohrteil 1 am Umfang umlaufende Widerhaken 4 auf. Der innere Durchmesser des ersten Rohrteils 1 kann im Bereich 2 der Aufweitung um einen Betrag d größer sein als der sich mitsamt den Widerhaken 4 ergebende Außendurchmesser des zweiten Rohrteils 3, wodurch das Aufeinanderschieben der Rohrteile 1 und 3 erleichtert wird. Als geeignete Materialien für die Rohrteile kommt, wie im allgemeinen Beschreibungsteil erwähnt, zum Beispiel für das erste Rohrteil PA66Gf35 und für das zweite Rohrteil PA6Gf10 oder PA6Gf15 aufgrund der geeigneten Wärmeausdehnungskoeffizienten in Frage.

In Figur 2 ist gezeigt, wie mit einer Heizvorrichtung 5 der Bereich 2 des ersten Rohrteils 1 erhitzt wird und dabei unter Lösung der eingefrorenen mechanischen Spannung auf das zweite Rohrteil 3 aufgeschrumpft wird. Das erste Rohrteil 1 sitzt nunmehr fest, auch unterstützt durch die Widerhaken 4, auf dem zweiten Rohrteil 3 auf und kann über Befestigungslöcher 6 auf dem oben erwähnten Zylinderkopf eines Verbrennungsmotors mitsamt dem Saugrohr (Rohrteil 1) aufgeschraubt werden.

### Bezugszeichenliste

- 1 =: erstes Rohrteil (Saugrohr)
- 2 =: Bereich der Aufweitung
- 3 =: zweites Rohrteil (Flanschteil)
- 4 =: Widerhaken
- 5 =: Heizvorrichtung
- 6 =: Befestigungslöcher

## Patentansprüche

1. Rohrverbindung, mit einem ersten Rohrteil aus einem thermoplastischen Kunststoffmaterial und einem Rohranschluß als zweites Rohrteil, auf den das erste Rohrteil aufschrumpfbar ist, wobei das erste Rohrteil (1) ein Kunststoff-Blasteil und das zweite Rohrteil (2) ein Kunststoffspritzgussteil ist, wobei beide Rohrteile über einen weiten Temperaturbereich ein in etwa gleichen Wärmedehnungskoeffizienten hinsichtlich der Längsund der Querdehnung aufweisen und wobei das erste Rohrteil (1) ein Kunststoff-Blasteil aus Polyamid mit einem Längs-Wärmeausdehnungskoeffizienten von in etwa 0,2*10⁻⁴/K und einem Quer-Wärmeausdehnungskoeffizienten von in etwa 1,0*10⁻⁴/K sowie das zweite Rohrteil (29) ein Kunststoff-Spritzgussteil aus Polyamid mit einem Längs-Wärmeausdehnungskoeffizienten von in etwa 0,35*10⁻⁴/K und einem Quer-Wärmeausdehnungskoeffizienten von in etwa 1,2*10⁻⁴/K ist.

2. Rohrverbindung nach Anspruch 1, **dadurch gekennzeichnet, dass** das erste Rohrteil (1) aus PA66Gf35 oder vergleichbaren Materialien und das zweite Rohrteil (3) aus PA6Gf10, PA6Gf15 oder vergleichbaren Materialien hergestellt ist.

3. Rohrverbindung nach einem der vorhergehenden Ansprüche, bei dem am zweiten Rohrteil (3), im Bereich des Sitzes des aufgeschrumpften ersten Rohrteils (1), umlaufende, gegen die Richtung des ersten Rohrteils (1) wirkende Widerhaken (4) angebracht sind, **dadurch gekennzeichnet, dass** das erste Rohrteil (1) Bestandteil eines Saugrohres im Ansaugweg eines Verbrennungsmotors ist und das andere Rohrteil als Flanschteil am Zylinderkopf des Verbrennungsmotors anschraubbar ist.

## Claims

1. Pipe coupling, having a first pipe part formed from a thermoplastic plastics material and a pipe connection formed as the second pipe part, onto which the first pipe part is shrink-fittable, wherein the first pipe part (1) is a plastics material blow-moulded part, and the second pipe part (3) is a plastics material injection moulded part, wherein both pipe parts have, over a wide temperature range, a substantially identical coefficient of thermal expansion in respect of longitudinal expansion and transverse expansion, and wherein the first pipe part (1) is a plastics material blow-moulded part formed from polyamide with a coefficient of longitudinal thermal expansion of substantially 0.2*10⁻⁴/K and a coefficient of transverse thermal expansion of substantially 1.0*10⁻⁴/K, and the second pipe part (3) is a plastics material injection moulded part formed from polyamide with a coefficient of longitudinal thermal expansion of substantially 0.35*10⁻⁴/K and a coefficient of transverse thermal expansion of substantially 1.2*10⁻⁴/K.

2. Pipe coupling according to claim 1, **characterised in that** the first pipe part (1) is produced from PA66Gf35 or comparable materials, and the second pipe part (3) is produced from PA6Gf10, PA6Gf15 or comparable materials.

3. Pipe coupling according to one of the preceding claims, wherein circumferential barbs (4), which act in opposition to the direction of the first pipe part (1), are provided on the second pipe part (3), in the region of the seat for the shrink-fitted first pipe part (1), **characterised in that** the first pipe part (1) is a constituent part of an induction pipe in the intake path of an internal combustion engine, and the other pipe part is connectable by screw, as the flanged part, to the cylinder head of the internal combustion engine.

## Revendications

1. Liaison tubulaire avec une première partie de tube constituée d'une matière plastique thermoplastique et un raccord de tube en tant que deuxième partie de tube sur laquelle partie on peut fretter la première partie de tube ; la première partie de tube (1) étant une partie soufflée en matière plastique et la deuxième partie de tube étant une pièce en matière plastique moulée par injection; les deux parties de tube présentant dans une large gamme de température un coefficient de dilatation thermique à peu près identique en direction longitudinale et transversale et la première partie de tube (1) étant une pièce en matière plastique soufflée constituée de polyamide avec un coefficient de dilatation longitudinale thermique d'à peu près 0,2*10⁻⁴ / K et un coefficient de dilatation transversale thermique d'à peu près 1,0* 10⁻⁴ / K ; la deuxième partie de tube (29) étant une pièce en matière plastique moulée par injection constituée de polyamide avec un coefficient de dilatation longitudinale thermique d'à peu près 0,35*10⁻⁴ / K et un coefficient de dilatation transversale thermique d'à peu près 1,2*10⁻⁴ / K.

2. Liaison tubulaire selon la revendication 1, **caractérisé en ce que** la première partie de tube (1) est fabriquée en PA66Gf35 ou des matières similaires et que la deuxième partie de tube (3) est fabriquée en PA6Gf10, PA6Gf15 ou des matières similaires.

3. Liaison de tube selon une des revendications précédentes dans laquelle on a fixé sur la deuxième partie de tube (3) dans la zone du siège de la première partie de tube (1) frettée des crans d'arrêt (4) circonférentiels agissant contre la direction de la première partie de tube (1), **caractérisé en ce que** la première partie de tube (1) fait partie d'un tube d'aspiration situé dans le trajet d'aspiration d'un moteur à combustion interne et l'autre partie de tube pouvant être vissée en tant que pièce de flasque sur la tête de cylindre du moteur à combustion interne.
